# EUROPEAN PATENT SPECIFICATION

(11) **EP 2 532 937 B1**
(45) Date of publication and mention of the grant of the patent: **19.03.2014**
(21) Application number: 12170238.5
(22) Date of filing: 31.05.2012
(51) Int. Cl.: E03C 1/04, F16L 41/02

(54) **Multiple connector**
Mehrfachkupplung
Connecteur multiple

(30) Priority: 07.06.2011 IT MI20111020
(43) Date of publication of application: 12.12.2012
(73) Proprietor: GM Rubinetterie S.r.l., 28040 Oleggio Castello (IT)
(72) Inventor: Gioira, Luigi, 28040 Oleggio Castello (IT); Gioira, Marco, 28040 Oleggio Castello (IT)
(74) Representative: Coloberti, Luigi

(56) References cited:
- US-A- 5 632 300
- US-A1- 2007 145 743

## Description

The present invention relates to a multiple connector and to a system for mixing-delivering sanitary and/or purified water comprising such a multiple connector. The multiple connector according to the invention is suitable for being used for tubes or water piping for domestic usage, particularly for connecting a mixing-delivering valve group and a unit for treating the water with a hydraulic network. The treating unit can comprise a filtering unit for food use water, possibly including a device for cooling and/or gassing and/or heating to a temperature near to 100°C said water.

In the State of the Art, a system is known for selectively delivering cold, hot and mixed sanitary water, and also purified water, possibly gassed by means of carbon dioxide. Said system comprises a valve group provided with a mixing tap for mixing cold and hot sanitary water supplied by a hydraulic network, and a control tap for delivering purified sanitary water, possibly gassed and/or cooled, flowing from a treating unit which is arranged for filtering, gassing and/or cooling the water.

The connection of the treating unit within said system is obtained upwardly to the valve group by providing a proper "T-shaped" pipe coupling and a ball valve suitable for stopping the flow in the same piping that is connected with the hydraulic network.

The "T-shaped" pipe coupling, also indicated in hydraulics with the term of "pipe tee" or "tee", comprises a pipe body provided with three connection branches, mutually arranged according to a configuration having just the shape of a "T". Each branch defines at its interior a respective passage cavity for the water and is internally provided with a thread of female type for the connection with a respective tube, provided, at one end thereof, with a threaded portion of male type. In particular, the "T-shaped" pipe coupling comprises a first passage cavity, suitable for receiving at the inlet the cold water provided by the hydraulic network via an inlet tube, a second passage cavity, enabling to deliver the cold water towards the valve group via a first outlet tube, and a third passage cavity, enabling the cold water to reach the treating unit via a second outlet tube.

The first passage cavity and the second passage cavity are axially aligned to each other, in other words the first passage cavity and the second passage cavity extend along a same first axis, whereas the third passage cavity extends along a second axis, perpendicularly arranged with respect to the first axis. In other words, in the coupling configuration of the "T-shaped" pipe coupling with the three tubes, the inlet tube results axially aligned, at least near the pipe coupling, with the first outlet tube, whereas the second outlet tube is perpendicularly arranged with respect to the inlet tube and the first outlet tube.

Such a configuration of the "T-shaped" pipe coupling often involves some mounting difficulties. In particular, the connections of the different tubes with the "T-shaped" pipe coupling result somewhat arduous and uncomfortable to be carried out, particularly when the spaces available for mounting are quite reduced.

It is known from US2007/145743 a system for coupling tubes, comprising a hollow body provided with three coupling-ports.

An object of the invention is to improve the known systems for selectively delivering both cold, hot and mixed sanitary water and purified water for food usage, possibly treated by gassing, and/or cooled and/or made boiling. In particular, an object of the invention is to provide an economical solution, capable of simplifying and speeding up the connection between hydraulic network, valve group and treating unit, and simultaneously capable of reducing the space occupied, required for mounting the different parts of the system. All above is made possible by a multiple connector according to claim 1.

Owing to the multiple connector according to the invention, all the drawbacks implied in the systems and the "T-shaped" pipe couplings described above are solved.

Features and advantages of the present invention will better result from the following description and the enclosed drawings that illustrate an exemplifying and not limitative embodiment, wherein:
Figure 1 is a partially schematic view of a system suitable for mixing-delivering cold, hot or mixed sanitary water and purified and gassed and/or cooled or heated water, wherein a multiple connector according to the invention is provided;
Figure 2 is an enlarged, longitudinal cross sectional view of the system of Figure 1;
Figure 3 is an enlarged, longitudinal cross sectional view of the multiple connector according to the invention that is included in the system of Figure 1;
Figure 4 is a view according to line 4-4 of Figure 3;
Figure 5 is a view of a mixing-delivering system similar to the system of Figure 1, wherein, however, the multiple connector according to the invention is arranged according to a different mounting configuration.

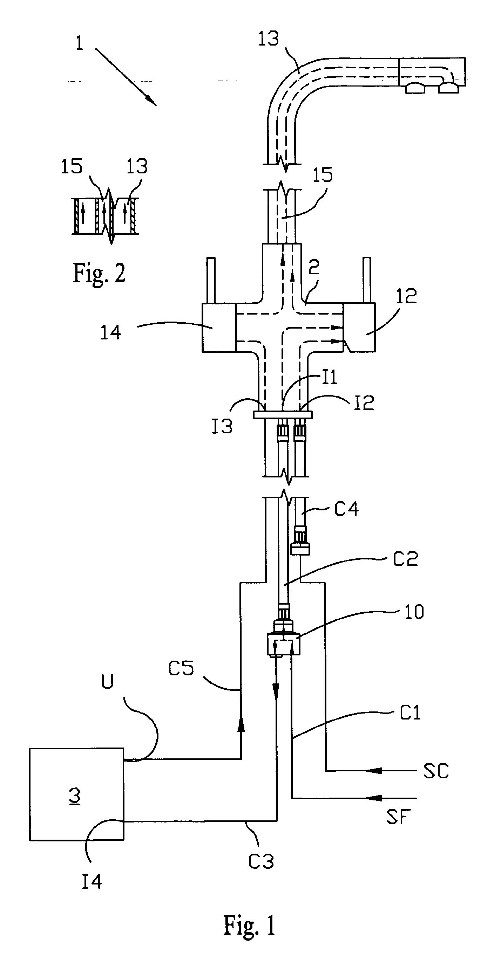

With reference to Figure 1, a system 1 for selectively delivering cold, hot and mixed sanitary water is shown, in an exemplifying and not limiting way, which system 1 is suitable as well for selectively delivering purified water for food usage, with possible gassing by means of carbon dioxide, and/or cooled and/or boiling water, i.e. water at a temperature near to 100°C. The system 1 comprises a valve group 2 for delivering sanitary water and purified water, and a unit 3 for treating the water, the unit 3 having the function of filtering, and possibly gassing, by means of addition of carbon dioxide, and/or cooling and/or carrying to a temperature near to 100°C, or about 90°C or, i.e. slightly higher or lower than 90°C, the water provided by the hydraulic network.

In particular, the valve group 2 comprises a mixing tap 12, for selectively supplying cold, hot or mixed sanitary water to a first delivering tubular duct 13; the valve group 2 further comprises a control tap 14 for controlling the flow of water treated and provided by the treating unit 3, which water is delivered by a second tubular duct 15, that is parallel or internat to the first delivering duct 13.

The system 1 comprises a multiple connector 10 according to the invention, which will be described in detail in the following. The multiple connector 10 is connected, by means of a first duct C1, with a source SF of cold sanitary water, making part of a conventional hydraulic network, and is connected at the same time, via a second duct C2, with the valve group 2, in order to deliver cold water, flowing from said source SF, to said valve group 2.

The multiple connector 10 is further connected, via a third duct C3, with the unit 3 for treating the water, in order to deliver cold water, flowing from the source SF, to said treating unit 3.

The valve group 2 is connected, via a fourth duct C4, with a source SC of hot water, delivered for example by a heating system, or a wall boiler, or a tank of hot water.

A first inlet port I1 for the mixing tap 12 can receive the cold water flowing through the second duct C2 from the multiple connector 10. A second inlet port I2 for the mixing tap 12 can receive the hot water flowing through the fourth duct C4. A third inlet port I3 for the control tap 14 can receive the treated water flowing from the treating unit 3 through a fifth duct C5. In other words, the cold water, reaching a fourth inlet port 14 of the unit 3 through the third duct C3, once treated, exits from the unit 3 through an outlet port U in order to reach the third inlet port I3 of the valve group 2, in particular in order to reach the control tap 14.

The multiple connector 10, according to the invention that is used in the system 1 disclosed above, is now described more in detail, with reference to the mounting configuration of Figure 1.

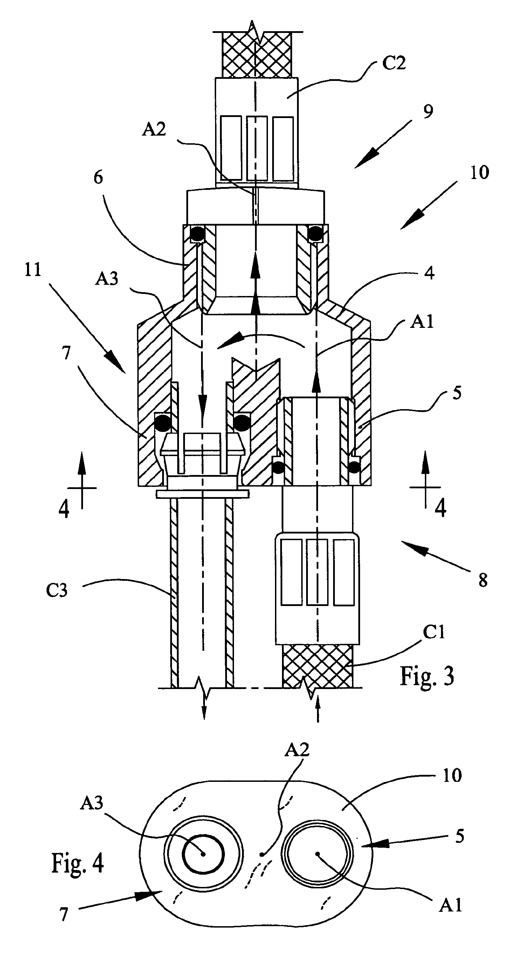

As better shown in Figure 3, the multiple connector 10 comprises a body 4 provided, at a first end 8, with a first connection and passage portion 5, suitable for coupling with a duct along a first axis A1. In the exemplifying embodiment of Figure 1, the first connection and passage portion 5 is coupled with the first duct C1 in order to receive the cold water provided by the source SF of the hydraulic network.

The first connection and passage portion 5 defines at its interior a first passage cavity for the water, which first passage cavity at least partially extends along the first axis A1.

The body 4 of the multiple connector 10 comprises, at a second end 9 opposite the first end 8, a second connection and passage portion 6, suitable for coupling with a duct along a second axis A2. In the exemplifying embodiment of Figure 1, the second connection and passage portion 6 is coupled with the second duct C2 in order to deliver the cold water provided by the source SF of the hydraulic network to the valve group 2.

The second connection and passage portion 6 defines at its interior a second passage cavity for the water, which second passage cavity at least partially extends along the second axis A2.

The body 4 of the multiple connector 10 further comprises, at the first end 8, a third connection and passage portion 7, suitable for coupling with a duct along a third axis A3. In particular, the third connection and passage portion 7 is coupled with the third duct C3 in order to deliver the cold water provided by the source SF of the hydraulic network to the treating unit 3. The third connection and passage portion 7 defines at its interior a third passage cavity for the water, which third passage cavity at least partially extends along the third axis A3. The first, second and third passage cavities are in fluid communication to each other. Consequently, the cold water coming from the cold source and entering the multiple connector 10 through the first portion 5, can flow both into the second connection and passage portion 6 and into the third connection and passage portion 7, in order to reach the mixing tap 12 and/or the treating unit 3 respectively.

The first connection and passage portion 5, the second connection and passage portion 6 and the third connection and passage portion 7 are mutually arranged to each other so that the first axis A1, the second axis A2 and the third axis A3 are mutually parallel. In particular, the second connection and passage portion 6 is arranged with respect to the first connection and passage portion 5 and the third connection and passage portion 7 so that the second axis A2 results interposed between the first axis A1 and the third axis A3. Owing to this configuration, the multiple connector 10 results more compact with respect to the already known conventional "T-shaped" pipe couplings, and consequently said multiple connector 10 enables, i.a., to remarkably reduce the space requirements of the system. The fact that the first connection and passage portion 5, the second connection and passage portion 6, and the third connection and passage portion 7 extend along axes that are parallel to each other, enables the different connection and passage ducts for the water to be maintained arranged parallel to a same direction, where possible at least near to the multiple connector 10, without the need of imposing large curvatures and changes of direction to the ducts - which large curvatures and changes of direction are conversely unavoidable with the conventional "T-shaped" pipe couplings -, especially in the case that very reduced spaces are available.

The first duct and the second duct comprise a first flexible tube C1, or a first copper tube, and a second flexible tube C2, or a second copper tube, respectively. The first connection and passage portion 5 and the second connection and passage portion 6 are configured for the threaded coupling with the first flexible tube C1 and the second flexible tube C2 respectively. In particular, the first portion 5 and the second portion 6 are provided with respective female threaded joints, having the size for example of 3/8". Other dimensions can also be provided for enabling tubes of different size to be connected, according to the pitch of the screw thread used (M8X1, M10X1, M12X1 etc.).

The third connection and passage portion 7 is configured for coupling, by means of a quick coupling joint 11, with the third duct C3, that in this case can be a tube C3 of plastic material with diameter of different sizes, for example 8 mm.

Owing to the so configured multiple connector 10, the connecting operations carried out by a specialised worker assigned to install the system are remarkably simplified and speeded up, particularly owing to the presence of the quick coupling joint 11, that enables the difficulties to be avoided, that arise on the contrary when using the conventional "T-shaped" pipe couplings.

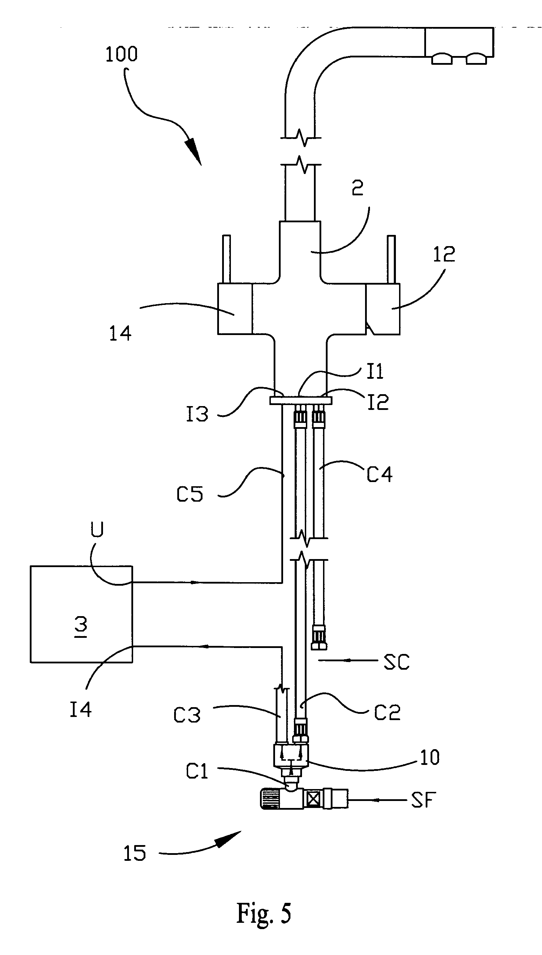

In figure 5 a system 100 is shown that is both structurally and functionally similar to the system 1 previously described. Consequently, for the system 100 the same reference numbers of figure 1 are used, in order to indicate similar or equivalent parts. The system 100 of Figure 5 differs from the embodiment of Figure 1 in that the multiple connector 10 is positioned according to a mounting configuration different from the mounting configuration previously described. In particular, the multiple connector 10 is positioned so that the second connection and passage portion 6 receives at the inlet the cold water provided by the hydraulic network. In particular, the first duct C1 can comprise in this case an under-sink unit 15. The first connection and passage portion 5 is coupled with the second duct C2 in order to deliver the cold water provided by the hydraulic network to the valve group 2.

The third connection and passage portion 7 is coupled with the third duct C3 in order to deliver the cold water provided by the hydraulic network to the treating unit 3. The fourth duct C4 connects the valve group 2 directly with the source SC of hot water, similarly as shown for the embodiment of the system 1. From the comparison of the two different mounting configurations shown in Figure 1 and Figure 5, it is clear that the multiple connector 10 results very versatile and suitable for being employed according to a plurality of modes of usage.

As already said, owing to the multiple connector 10, the space requirements can be reduced and a quick and safe connection can be obtained, owing to the presence of the quick coupling joint 11 and because flexible tubes and seals of the "O-ring" type of proven and remarkable reliability can be used respectively. In addition, advantages are obtained from the economic point of view, since there is no need to use pipe couplings of different type that increase the installation costs.

Variations and/or additions can be made to all was described above and was shown in the enclosed drawings.

## Claims

1. Multiple connector (10) for piping, comprising a body (4) provided with:
- a first connection and passage portion (5) suitable for coupling along a first axis (A1) with a first duct (C1) for the passage of a fluid,
- a second connection and passage portion (6) suitable for coupling along a second axis (A2) with a second duct (C2) for the passage of said fluid, and
- a third connection and passage portion (7) suitable for coupling along a third axis (A3) with a third duct (C3) for the passage of said fluid,
said first (5), second (6) and third (7) connection and passage portions, being mutually arranged so that said first axis (A1), said second axis (A2) and said third axis (A3) are mutually parallel, **characterised in that** said first connection and passage portion (5) and said second connection and passage portion (6) are configured for the threaded coupling with said first duct (C1) and said second duct (C2) respectively, and said third connection and passage portion (7) is configured for coupling by means of a quick coupling joint (11) with said third duct (C3).

2. Multiple connector (10) according to claim 1, wherein said first (5) and said third (7) connection and passage portions flow out at a first end (8) of said body (4), whereas said second connection and passage portion (6) flows out at a second end (9) of said body (4) opposing said first end (8).

3. Multiple connector (10) according to claim 1 or 2, wherein said first connection and passage portion (5) and said second connection and passage portion (6) are internally provided with a first female thread and a second female thread respectively for coupling with said first duct (C1) and said second duct (C2) respectively.

4. Multiple connector (10) according to any of claims 1 to 3, wherein said first connection and passage portion (5), said second connection and passage portion (6) and said third connection and passage portion (7) extend with respect to each other so that said second axis (A2) results interposed between said first axis (A1) and said third axis (A3).

5. Multiple connector (10) according to any of claims 1 to 4, wherein said first connection and passage portion (5), said second connection and passage portion (6) and said third connection and passage portion (7) define at their interior respective passage cavities that are in fluid communication to each other.

6. Multiple connector (10) according to any of claims 1 to 5, wherein said body (4) together with said first connection and passage portion (5), said second connection and passage portion (6) and said third connection and passage portion (7) are made in one piece.

7. Multiple connector (10) according to any of claims 1 to 6, wherein said first connection and passage portion (5) is suitable for being connected with a hydraulic network in order to receive at the inlet water from said hydraulic network, said second connection and passage portion (6) is suitable for being connected with a valve group (2) in order to deliver at the outlet the water to said valve group (2), and said third connection and passage portion (7) is suitable for being connected with a treating unit (3) in order to deliver at the outlet the water to said treating unit (3), said treating unit (3) comprising a filtering unit, possibly provided with a gassing and/or cooling and/or heating device for heating to temperature near to 100°C.

8. Multiple connector (10) according to any of claims 1 to 6, wherein said second connection and passage portion (6) is suitable for being connected with a hydraulic network in order to receive at the inlet the water from said hydraulic network, said first connection and passage portion (5) is suitable for being connected with a valve group (2) in order to deliver at the outlet the water to said valve group (2), and said third connection and passage portion (7) is suitable for being connected with a treating unit (3) in order to deliver at the outlet the water to said treating unit (3), said treating unit (3) comprising a filtering unit, possibly provided with a gassing and/or cooling and/or heating device for heating to temperature near to 100°C.

9. System (1; 100) for selectively mixing-delivering sanitary water and purified water for food usage, comprising:
- a mixing group (2) for delivering cold, hot, and/or mixed sanitary water, and for delivering purified and possibly treated water,
- a treating unit (3) for said water and
- a multiple connector (10) according to any of claims 1 to 8, for connecting said mixing group (2) and said treating unit (3) with the hydraulic network.

10. System (1; 100) according to claim 9, wherein said treating unit comprises a filtering unit (3), possibly provided with a device suitable for cooling, and/or gassing and/or heating to a temperature near to 100°C said water.

## Patentansprüche

1. Mehrfachkupplung (10) für Rohrleitung, aufweisend ein Gehäuse (4), das Folgendes aufweist:
- einen ersten Verbindungs- und Durchgangsteil (5), geeignet zum Verbinden entlang einer ersten Achse (A1) mit einem ersten Durchgang (C1) für das Durchströmen eines Fluids,
- einen zweiten Verbindungs- und Durchgangsteil (6), geeignet zum Verbinden entlang einer zweiten Achse (A2) mit einem zweiten Durchgang (C2) für das Durchströmen des Fluids, und
- einen dritten Verbindungs- und Durchgangsteil (7), geeignet zum Verbinden entlang einer dritten Achse (A3) mit einem dritten Durchgang (C3) für das Durchströmen des Fluids,
wobei die ersten (5), zweiten (6) und dritten (7) Verbindungs- und Durchgangsteile so zueinander angeordnet sind, dass die erste Achse (A1), die zweite Achse (A2) und die dritte Achse (A3) parallel zueinander sind, **dadurch gekennzeichnet, dass** der erste Verbindungs- und Durchgangsteil (5) und der zweite Verbindungs- und Durchgangsteil (6) konfiguriert sind für eine Schraubverbindung mit dem ersten Durchgang (C1) beziehungsweise dem zweiten Durchgang (C2) und der dritte Verbindungs- und Durchgangsteil (7) konfiguriert ist für ein Verbinden mithilfe einer Schnellkupplungsverbindung (11) mit dem dritten Durchgang (C3).

2. Mehrfachkupplung (10) nach Anspruch 1, wobei der erste (5) und der dritte (7) Verbindungs- und Durchgangsteil an einem ersten Ende (8) des Gehäuses (4) ausfließen, wobei der zweite Verbindungs- und Durchgangsteil (6) an einem zweiten Ende (9) des Gehäuses (4) ausfließt, das dem ersten Ende (8) entgegen gerichtet ist.

3. Mehrfachkupplung (10) nach Anspruch 1 oder 2, wobei der erste Verbindungs- und Durchgangsteil (5) und der zweite Verbindungs- und Durchgangsteil (6) innenseitig jeweils ein erstes Einschraubgewinde und ein zweites Einschraubgewinde für ein Verbinden mit dem ersten Durchgang (C1) beziehungsweise zweiten Durchgang (C2) aufweist.

4. Mehrfachkupplung (10) nach einem der Ansprüche 1 bis 3, wobei sich der erste Verbindungs- und Durchgangs-teil (5), der zweite Verbindungs- und Durchgangsteil (6) und der dritte Verbindungs- und Durchgangsteil (7) auf solche Weise in Bezug zueinander erstrecken, dass die zweite Achse (A2) zwischen der ersten Achse (A1) und der dritten Achse (A3) zu liegen kommt.

5. Mehrfachkupplung (10) nach einem der Ansprüche 1 bis 4, wobei der erste Verbindungs- und Durchgangsteil (5), der zweite Verbindungs- und Durchgangsteil (6) und der dritte Verbindungs- und Durchgangsteil (7) in ihrem inneren jeweiligen Durchgang Hohlräume definieren, die miteinander in Fluidverbindung stehen.

6. Mehrfachkupplung (10) nach einem der Ansprüche 1 bis 5, wobei das Gehäuse (4) zusammen mit dem ersten Verbindungs- und Durchgangsteil (5), dem zweiten Verbindungs- und Durchgangsteil (6) und dem dritten Verbindungs- und Durchgangsteil (7) in einem Stück hergestellt sind.

7. Mehrfachkupplung (10) nach einem der Ansprüche 1 bis 6, wobei der erste Verbindungs- und Durchgangsteil (5) geeignet ist zum Verbinden mit einem Hydrauliknetz, um am Einlass Wasser vom Hydrauliknetz zu empfangen, der zweite Verbindungs- und Durchgangsteil (6) geeignet ist zum Verbinden mit einer Ventilgruppe (2), um am Auslass das Wasser an die Ventilgruppe (2) auszugeben, und der dritte Verbindungs- und Durchgangsteil (7) geeignet ist zum Verbinden mit einer Behandlungseinheit (3), um am Auslass das Wasser an die Behandlungseinheit (3) auszugeben, wobei die Behandlungseinheit (3) eine Filtereinheit, gegebenenfalls aufweisend eine Begasungs- und/oder Kühlungs- und/oder Heizungseinheit für Erhitzen der Temperatur auf annähernd 100 °C, aufweist.

8. Mehrfachkupplung (10) nach einem der Ansprüche 1 bis 6, wobei der zweite Verbindungs- und Durchgangsteil (6) geeignet ist zum Verbinden mit einem Hydrauliknetz, um am Einlass das Wasser vom Hydrauliknetz zu empfangen, wobei der erste Verbindungs- und Durch-gangsteil (7) geeignet ist zum Verbinden mit einer Ventilgruppe (2), um am Auslass das Wasser an die Ventilgruppe (2) auszugeben, und der dritte Verbindungs- und Durchgangsteil (7) geeignet ist zum Verbinden mit einer Behandlungseinheit (3), um am Auslass das Wasser an die Behandlungseinheit (3) auszugeben, wobei die Behandlungseinheit (3) eine Filtereinheit, gegebenenfalls aufweisend eine Begasungs- und/oder Kühlungs- und/oder Heizungseinheit für Erhitzen der Temperatur auf annähernd 100 °C, aufweist.

9. System (1; 100) für wahlweises Mischen-Ausgeben von Betriebswasser und gereinigtem Wasser für Verwendung als Nahrungsmittel, aufweisend:
- eine Mischgruppe (2) für die Ausgabe von kaltem, heißem und/oder gemischtem Betriebswasser und für die Ausgabe von gereinigtem und möglicherweise behandeltem Wasser,
- eine Behandlungseinheit (3) für das Wasser und
- eine Mehrfachkupplung (10) nach einem der Ansprüche 1 bis 8 zum Verbinden der Mischgruppe (2) und der Behandlungseinheit (3) mit dem Hydrauliknetz.

10. System (1; 100) nach Anspruch 9, wobei die Behandlungseinheit eine Filtereinheit (3), gegebenenfalls aufweisend eine für Kühlen und/oder Begasen und/oder Beheizen auf eine Temperatur von annähernd 100 °C des Wassers geeignete Vorrichtung, aufweist.

## Revendications

1. Raccord multiple (10) pour canalisation, comprenant un corps (4) pourvu des éléments suivants :
- une première portion de raccordement et de passage (5) convenant à un couplage le long d'un premier axe (A1) avec un premier conduit (C1) pour le passage d'un fluide,
- une deuxième portion de raccordement et de passage (6) convenant à un couplage le long d'un deuxième axe (A2) avec un deuxième conduit (C2) pour le passage dudit fluide, et
- une troisième portion de raccordement et de passage (7) convenant à un couplage le long d'un troisième axe (A3) avec un troisième conduit (C3) pour le passage dudit fluide,
lesdites première (5), deuxième (6) et troisième (7) portions de raccordement et de passage étant mutuellement aménagées de sorte que ledit premier axe (A1), ledit deuxième axe (A2) et ledit troisième axe (A3) soient mutuellement parallèles, **caractérisé en ce que** ladite première portion de raccordement et de passage (5) et ladite deuxième portion de raccordement et de passage (6) sont configurées pour un couplage vissé avec ledit premier conduit (C1) et ledit deuxième conduit (C2), respectivement, et ladite troisième portion de raccordement et de passage (7) est configurée pour se coupler au moyen d'un joint de couplage rapide (11) avec ledit troisième conduit (C3).

2. Raccord multiple (10) selon la revendication 1, dans lequel lesdites première (5) et troisième (7) portions de raccordement et de passage s'échappent à une première extrémité (8) dudit corps (4), tandis que la deuxième portion de raccordement et de passage (6) s'échappe à une seconde extrémité (9) dudit corps (4) opposée à ladite première extrémité (8).

3. Raccord multiple (10) selon la revendication 1 ou la revendication 2, dans lequel ladite première portion de raccordement et de passage (5) et ladite deuxième portion de raccordement et de passage (6) sont pourvues intérieurement d'un premier filet femelle et d'un second filet femelle, respectivement, pour se coupler avec ledit premier conduit (C1) et ledit deuxième conduit (C2), respectivement.

4. Raccord multiple (10) selon l'une quelconque des revendications 1 à 3, dans lequel ladite première portion de raccordement et de passage (5), ladite deuxième portion de raccordement et de passage (6) et ladite troisième portion de raccordement et de passage (7) s'étendent l'une par rapport à l'autre de sorte que ledit deuxième axe (A2) soit intercalé entre ledit premier axe (A1) et ledit troisième axe (A3).

5. Raccord multiple (10) selon l'une quelconque des revendications 1 à 4, dans lequel ladite première portion de raccordement et de passage (5), ladite deuxième portion de raccordement et de passage (6) et ladite troisième portion de raccordement et de passage (7) définissent, dans leur passage interne respectif, des cavités qui sont en communication de fluide l'une avec l'autre.

6. Raccord multiple (10) selon l'une quelconque des revendications 1 à 5, dans lequel ledit corps (4) est formé d'un seul tenant conjointement avec ladite première portion de raccordement et de passage (5), ladite deuxième portion de raccordement et de passage (6) et ladite troisième portion de raccordement et de passage (7).

7. Raccord multiple (10) selon l'une quelconque des revendications 1 à 6, dans lequel ladite première portion de raccordement et de passage (5) convient pour être raccordée à un réseau hydraulique de manière à recevoir à l'entrée de l'eau provenant dudit réseau hydraulique, ladite deuxième portion de raccordement et de passage (6) convient pour être raccordée à un groupe de soupapes (2) afin de délivrer à la sortie l'eau audit groupe de soupapes (2), et ladite troisième portion de raccordement et de passage (7) convient pour être raccordée à une unité de traitement (3) afin de délivrer à la sortie l'eau à ladite unité de traitement (3), ladite unité de traitement (3) comprenant une unité filtrante éventuellement pourvue d'un dispositif de dégazage et/ou de refroidissement et/ou de chauffage pour chauffer à une température proche de 100 °C.

8. Raccord multiple (10) selon l'une quelconque des revendications 1 à 6, dans lequel ladite deuxième portion de raccordement et de passage (6) convient pour être raccordée à un réseau hydraulique afin de recevoir à l'entrée l'eau provenant dudit réseau hydraulique, ladite première portion de raccordement et de passage (7) convient pour être raccordée à un groupe de soupapes (2) afin de délivrer à la sortie l'eau audit groupe de soupapes (2) et ladite troisième portion de raccordement et de passage (7) convient pour être raccordée à une unité de traitement (3) afin de délivrer à la sortie l'eau à ladite unité de traitement (3), ladite unité de traitement (3) comprenant une unité filtrante éventuellement pourvue d'un dispositif de dégazage et/ou de refroidissement et/ou de chauffage pour chauffer à une température proche de 100 °C.

9. Système (1 ; 100) pour mélanger et délivrer sélectivement de l'eau sanitaire et de l'eau purifiée pour usage alimentaire, comprenant :
- un groupe de mélange (2) pour délivrer de l'eau sanitaire froide, chaude et/ou mixte et pour délivrer de l'eau purifiée et éventuellement traitée,
- une unité de traitement (3) pour ladite eau et
- un raccord multiple (10) selon l'une quelconque des revendications 1 à 8 pour raccorder ledit groupe de mélange (2) et ladite unité de traitement (3) au réseau hydraulique.

10. Système (1 ; 100) selon la revendication 9, dans lequel ladite unité de traitement comprend une unité filtrante (3) éventuellement pourvue d'un dispositif convenant pour refroidir et/ou dégazer et/ou chauffer à une température proche de 100 °C ladite eau.
